# EUROPÄISCHE PATENTSCHRIFT

(11) **EP 3 079 876 B1**
(45) Veröffentlichungstag und Bekanntmachung des Hinweises auf die Patenterteilung: **08.05.2019**
(21) Anmeldenummer: 14806541.0
(22) Anmeldetag: 27.11.2014
(51) Int. Cl.: B29C 44/18, B60R 13/08, B62D 29/00, B29L 31/30, B29K 105/04, B29K 705/00, B29K 105/16, B29K 105/00

(54) **VERFAHREN ZUR HERSTELLUNG EINES FAHRZEUG-KAROSSERIEELEMENTS SOWIE FAHRZEUG KAROSSERIEELEMENT**
METHOD FOR MANUFACTURING A VEHICLE BODY ELEMENT AND VEHICLE BODY ELEMENT
PROCÉDÉ DE FABRICATION D'UN ÉLÉMENT DE CARROSSERIE DE VÉHICULE ET ÉLÉMENT DE CARROSSERIE DE VÉHICULE

(30) Priorität: 09.12.2013 DE 102013022247
(43) Veröffentlichungstag der Anmeldung: 19.10.2016
(73) Patentinhaber: Audi AG, 85045 Ingolstadt (DE)
(72) Erfinder: JÄSCHKE, Anja, 92339 Beilngries (DE); BOEHME, Mario, 92339 Beilngries (DE)
(86) Internationale Anmeldenummer: PCT/EP2014/003181
(87) Internationale Veröffentlichungsnummer: WO 2015/086118

(56) Entgegenhaltungen:
- EP-A1- 1 925 417
- EP-A2- 2 511 087
- DE-A1- 3 932 121
- DE-A1- 19 850 372
- US-A- 4 922 596
- US-A- 5 489 405

## Beschreibung

Die Erfindung betrifft ein Verfahren zur Herstellung eines Fahrzeug-Karosserieelements nach dem Oberbegriff des Patentanspruches 1 sowie ein solche Fahrzeug-Karosserieelement nach dem Oberbegriff des Patentanspruches 10.

Im Automobilbau sind unter anderem für crashsensible Bauteile, etwa Knotenstellen oder einer Fahrzeug-Säule, spezielle Anforderungen an die Bauteilstabilität zu erfüllen. Dies erfolgt in gängiger Praxis durch eine Erhöhung der Materialstärken von Metallblechteilen mit einer entsprechenden Steigerung des Bauteilgewichts.

Generell ist auch der Einsatz von Kunststoff-Strukturbauteilen bekannt, die im Vergleich zu den Metallblechteilen ein reduziertes Bauteilgewicht aufweisen. Beispielhaft ist aus der EP 1 745 908 B1 ein Strukturhohlbauteil bekannt, das einen faserverstärkten Kunststoff aufweist und in einem RTM-Prozess hergestellt wird. Zudem ist aus der DE 10 2006 056 136 A1 ein Leichtbau-Formteil für den Einsatz im Automobilbau bekannt, das einen Kernbereich aus einem Leichtbau-Verbundwerkstoff aufweist, der aus einem Matrixmaterial und mit darin integriertem Leichtfüllstoffmaterial aufgebaut ist. Der Verbau solcher Kunststoff-Strukturbauteile in einer Fahrzeugkarosserie ist jedoch mit fertigungstechnisch hohem Aufwand verbunden.

Aus der US 4 922 596 A ist ein gattungsgemäßes Verfahren zur Herstellung eines Fahrzeug-Karosserieelementes bekannt. Demzufolge wird in eine Hohlstruktur eines Trägerprofilteils ein Kunstharz eingebracht. Das Kunstharz wird in einen Hohlraum eingespritzt oder eingegossen und härtet darin aus. Um eine geringe Dichte und gleichzeitig ein hochfestes Material zu erhalten, wird dem Kunstharz ein porenbildendes Mittel zugefügt.

Die Aufgabe der Erfindung besteht darin, ein Fahrzeug-Karosserieelement sowie ein Verfahren zur Herstellung eines Fahrzeug-Karosserieelements bereitzustellen, bei dem in fertigungstechnisch einfacher Weise die Formstabilität der Fahrzeugkarosserie insbesondere im Crashfall erhöht werden kann.

Die Aufgabe ist durch die Merkmale des Patentanspruches 1 oder des Patentanspruches 10 gelöst. Bevorzugte Weiterbildungen der Erfindung sind in den abhängigen Ansprüchen offenbart.

Die Offenbarung ist vorrangig bei der Herstellung eines Bauteilverbunds, bestehend aus einem Kunststoff, insbesondere einem Kunststoff-Strukturschaum, und einem Metallblechteil, anwendbar. Nachfolgend werden daher die Merkmale der Offenbarung speziell im Hinblick auf diese Materialauswahl offenbart. Dieselben Merkmale der Offenbarung treffen jedoch auch auf andere Materialkombinationen zu, etwa einem Organoblechteil, in dessen Hohlstruktur zum Beispiel ein Kunststoff eingebracht wird. Alternativ kann auch ein Metallblechteil umfasst sein, in dessen Hohlstruktur in einem Gießprozess eine flüssige Ausgangskomponente eines Leichtmetallwerkstoffes eingegossen wird.

Als ein Trägerprofilteil kann ein Metall-Blechteil mit einer Hohlstruktur bereitgestellt werden, die zumindest teilweise mit einer flüssigen Ausgangskomponente eines Leichtbauwerkstoffes, insbesondere eines Kunststoffs, eingebracht wird. Anschließend erfolgt unter Bildung des Bauteilverbunds eine Aushärtung des Leichtbauwerkstoffes innerhalb der Hohlstruktur des Blechteiles.

Der Kunststoff ist ein Strukturschaum, der unter Druck und Wärme aufgeschäumt wird. Im Hinblick auf eine einfache Prozessgestaltung wird die flüssige Ausgangskomponente direkt in die Hohlstruktur des Blechteils eingespritzt und darin aufgeschäumt. Die flüssige Kunststoff-Ausgangskomponente wird daher nicht in einem separaten Prozessschritt zunächst in einem Schäumungswerkzeug aufgeschäumt und erst dann in die Blechteil-Hohlstruktur eingebracht, sondern direkt in der Blechteil-Hohlstruktur aufgeschäumt. Auf diese Weise wird gleichzeitig mit der Herstellung des Strukturschaums auch eine stoffschlüssige Verbindung mit dem tragenden Blechteil ermöglicht, und zwar in einem gemeinsamen Prozessschritt. Die Hohlstruktur des Blechteils bildet somit unmittelbar eine Kavität, in die die flüssige Ausgangskomponente des Kunststoffes eingespritzt wird.

Im Hinblick auf eine weitere Gewichtsreduzierung des Karosserieelementes ist in dem Strukturschaum ein Leichtfüllstoff-Granulat integriert. Das Leichtfüllstoff-Granulat kann beispielhaft in Form von Hohlkörpern bereitgestellt sein, etwa Acrylglaskugeln, Leichtbaugranulat aus geschäumten Glas oder Ton, Mineralschaumgranulat, Metallschaumgranulat oder dergleichen. Generell sind sämtliche zellulare Verbundwerkstoffe einsetzbar, die im Vergleich zum Strukturschaum ein reduziertes Raumgewicht aufweisen. Der Schäumungsprozess erfolgt bevorzugt bei einer Prozesstemperatur, die kleiner als die Schmelztemperatur des Leichtfüllstoff-Granulats ist.

In einer Ausführungsvariante kann das Blechteil im Querschnitt schalenförmig mit einer offener Hohlstruktur ausgeführt sein. In diesem Fall kann die offene Hohlstruktur im Schäumungsprozess mit einem Schäumungswerkzeug schaumdicht geschlossen werden. Anschließend kann über einen im Schäumungsprozess integrierten Einschusskanal die flüssige Ausgangskomponente des Strukturschaums in die Kavität eingespritzt und darin aufgeschäumt werden.

In der obigen Prozessfolge muss ein Schäumungswerkzeug bereitgestellt werden, das speziell für einen schaumdichten Abschluß der offenen Blechteil-Hohlstruktur ausgelegt ist. In einer fertigungstechnisch einfacheren Alternative kann die Blechteil-Hohlstruktur auch einen geschlossenen Querschnitt aufweisen, wobei in einer, die Hohlstruktur begrenzenden Wandung der Einschusskanal zum Einspritzen der flüssigen Ausgangskomponente des Strukturschaums integriert sein kann. In diesem Fall kann daher auf ein Schäumungswerkzeug verzichtet werden.

Für eine prozesssichere Herstellung des Karosserieelementes wird das Leichtfüllstoff-Granulat in einem ersten Prozessschritt vor dem Einspritzen der flüssigen Strukturschaum-Ausgangskomponente als ein loses Schüttgut in die Hohlstruktur des Blechteils eingebracht. Anschließend wird in einem zweiten Prozessschritt die flüssige Strukturschaum-Ausgangskomponente in die Hohlstruktur eingespritzt und darin expandiert.

Die Hohlstruktur des Blechteils ist in mehrere Teilkammern unterteilt. Diese können in Abhängigkeit von der angestrebten Bauteil-Formstabilität jeweils in unterschiedlicher Mengenverteilung mit dem Leichtfüllstoff-Granulat gefüllt werden. Dadurch ergibt sich ein Karosserieelement mit lokal unterschiedlichem Raumgewicht und/oder lokal unterschiedlicher Formstabilität.

Nicht erfindungsgemäß kann das Leichtbau-Granulat direkt in einem Mischkopf in die flüssige Komponente des Leichtbauwerkstoffes eingebracht werden. Dies ermöglicht eine homogene Mischung und Benetzung des Materials sowie eine genaue Dosierung des Teilchenanteils.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend von Zeichnungen näher erläutert.

Es zeigen:
- Fig. 1: in einer perspektivischen Teildarstellung eine Seitenstruktur einer Fahrzeug-Karosserie;
- Fig. 2: eine Schnittdarstellung der B-Säule der Fahrzeug-Karosserie entlang der Schnittebene I-I aus der Fig. 1;
- Fig. 3 bis 5: jeweils Ansichten, die das Verfahren zur Herstellung des in der Fig. 2 gezeigten Karosserieelements veranschaulichen; und
- Fig. 6: in einer perspektivischen Teildarstellung das äußere Blechteil der B-Säule in Alleinstellung; sowie
- Fig. 7 und 8: jeweils Ansichten, die ein Herstellungsverfahren gemäß einem zweiten Ausführungsbeispiel veranschaulichen.

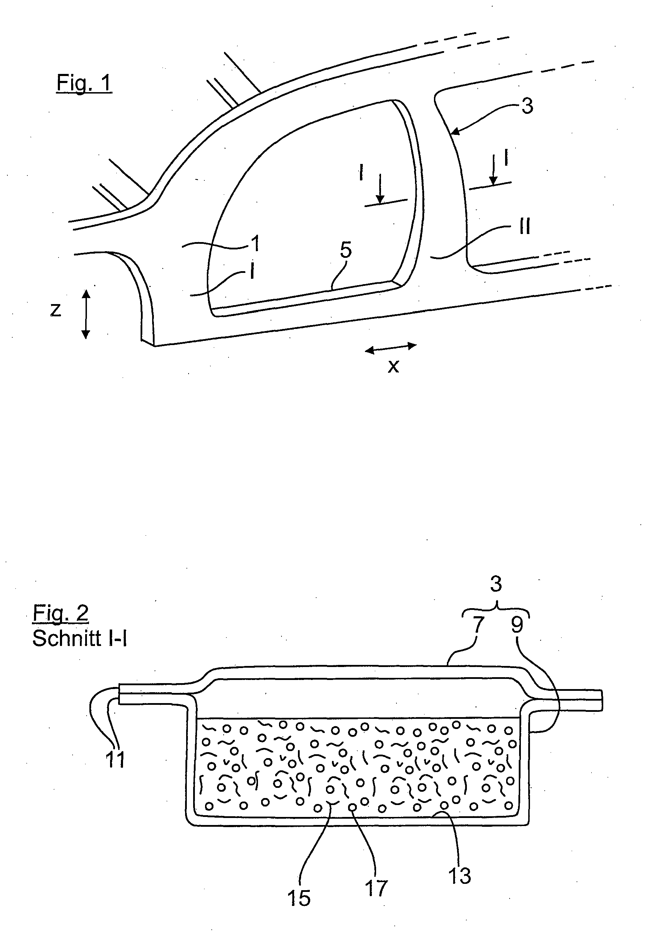

In der Fig. 1 ist grob schematisch eine Seitenstruktur einer Fahrzeug-Karosserie angedeutet, und zwar mit einer A-Säule 1 sowie einer B-Säule 3, die bodenseitig über einen in der Fahrzeuglängsrichtung x verlaufenden Türschweller 5 miteinander verbunden sind. Der Türschweller 5 ist an Knotenpunkten I, II jeweils an der A-Säule 1 und der B-Säule 3 angebunden. Die Fig. 1 wie auch die Fig. 2 bis 8 sind im Hinblick auf ein einfaches Verständnis der Erfindung angefertigt. Von daher sind die Figuren lediglich grob vereinfachte Darstellungen, die keinen realitätsgetreuen Aufbau der Fahrzeugkarosserie wiedergeben.

Wie aus der Fig. 2 hervorgeht, ist die B-Säule 3 mit einem inneren Blechteil 7 und einem äußeren Blechteil 9 aufgebaut, die an Randflanschen 11 zum Beispiel über Punktschweißung miteinander verbunden sind. Das äußere Blechteil 9 ist im Querschnitt U-förmig ausgebildet, und zwar mit einem Profilboden sowie daran hochgezogenen Seitenwänden, die zusammen eine offene Hohlstruktur 13 begrenzen. Das äußere Blechteil 9 wirkt außerdem als ein Trägerprofilteil, das mit einem Kunststoff-Strukturschaum 15 zu einem einstückigen Bauteilverbund zusammengefügt ist. Der Kunststoff-Strukturschaum 15 ist in der Hohlstruktur 13 des äußeren Blechteils 9 angeordnet. Zudem ist im Kunststoff-Strukturschaum 15 ein Leichtfüllstoff-Granulat 17 integriert. Wie aus der Fig. 2 hervorgeht, umschließt der eingespritzte Kunststoff-Strukturschaum 15 das Leichtfüllstoff-Granulat 17.

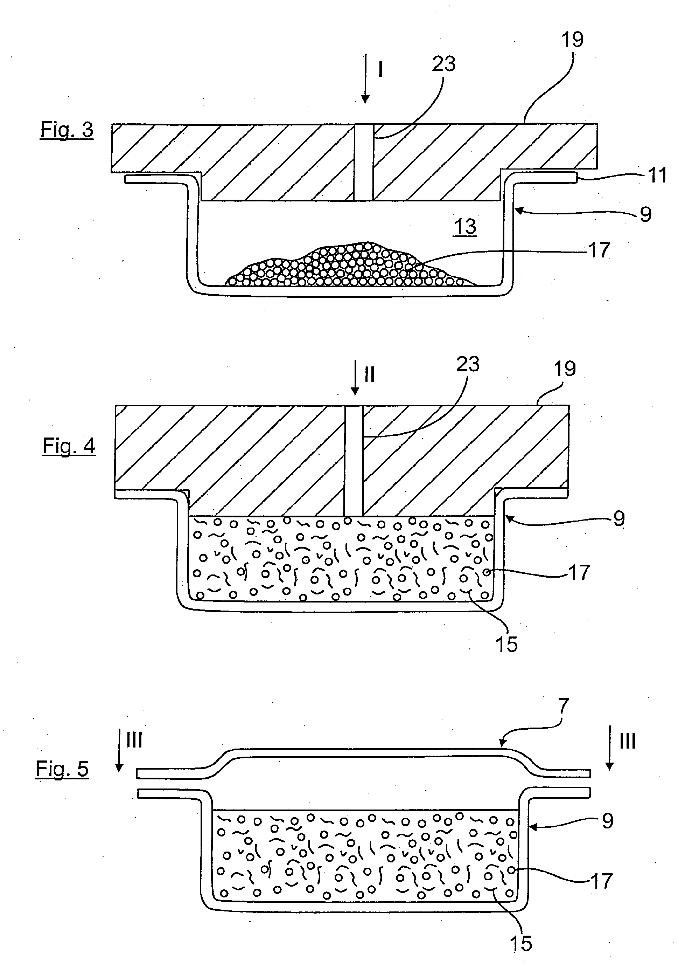

Nachfolgend wird anhand der Fig. 3 und 4 das Verfahren zur Herstellung der B-Säule 3 beschrieben. Demzufolge wird zunächst das äußere Blechteil 9 zum Beispiel in einem Tiefziehverfahren unter Bildung der Hohlstruktur 13 vorgeformt. Anschließend wird das äußere Blechteil 9 in eine nicht gezeigte Schäumungsanlage geführt, in der die Hohlstruktur 13 des äußeren Blechteils 9 in einem Schäumungsprozess mit dem Kunststoff-Strukturschaum 15 gefüllt wird. Im Schäumungsprozess wird zunächst der offene Querschnitt der Hohlstruktur 13 mittels eines Schäumungswerkzeuges 19 (Fig. 3 und 4) schaumdicht überdeckt. Das Schäumungswerkzeug 19 weist zudem einen Einschusskanal 23 auf, durch den das Leichtfüllstoff-Granulat 17 und die flüssige Ausgangskomponente des Kunststoff-Schaums 15 in die Kavität einführbar ist.

Anschließend wird in einem ersten Prozessschritt I (Fig. 3) das Leichtfüllstoff-Granulat 17 als ein Schüttgut in die Hohlstruktur 13 des äußeren Blechteiles 9 eingebracht. In einem weiteren Prozessschritt II (Fig. 4) wird dann unter Druck und Wärme die flüssige Ausgangskomponente des Kunststoff-Strukturschaumes 15 in die von dem Schäumungswerkzeug 19 und dem äußeren Blechteil 9 definierte Kavität eingespritzt und darin aufgeschäumt. Nach erfolgter Aushärtung des Kunststoff-Strukturschaums 15 ergibt sich der in der Fig. 5 gezeigte einteilige Bauteilverbund bestehend aus dem äußeren Blechteil 9 und dem Kunststoff-Strukturschaum 15. In einem folgenden Prozessschritt III (Fig. 5) wird dann das innere Blechteil 7 durch Punktschweißung an die Verbindungsflansche 11 des äußeren Blechteiles 9 angefügt.

Das Leichtfüllstoff-Granulat 17 weist ein im Vergleich zum Kunststoff-Strukturschaum 15 reduziertes Raumgewicht auf, wodurch sich das Bauteilgewicht der B-Säule 3 reduziert. Der Schäumungsprozess erfolgt dabei mit einer Prozesstemperatur, die kleiner als die Schmelztemperatur des Leichtfüllstoff-Granulats 17 ist.

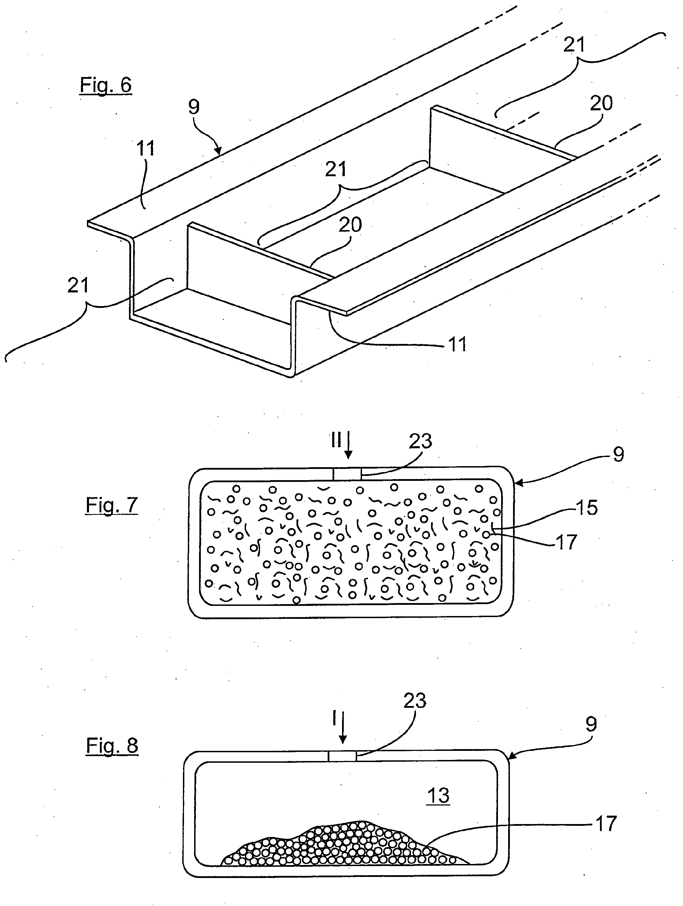

In der Fig. 6 ist das äußere Blechteil 9 in einer perspektivischen Darstellung gezeigt. Demzufolge sind in der offenen Hohlstruktur 13 des äußeren Blechteiles 9 Schottteile 20 eingesetzt, mit denen die Hohlstruktur 13 in einzelne Teilkammern 21 unterteilt sind. Jede dieser einzelnen Teilkammern 21 kann mit einer unterschiedlichen Schüttgutmenge an Leichtfüllstoff-Granulat 17 gefüllt werden. Auf diese Weise ergibt sich nach dem Schäumungsprozess ein Bauteilverbund, der ein lokal unterschiedliches Raumgewicht sowie eine lokal unterschiedliche Formstabilität aufweist. Die Schottteile 20 sind bevorzugt so gestaltet, dass die davon begrenzten Teilkammern 21 strömungstechnisch miteinander in Verbindung stehen. Beim Schäumungsprozess kann daher die flüssige Ausgangskomponente des Kunststoff-Strukturschaums 15 ohne weiteres in sämtliche Teilkammern 21 fließen.

Anhand der Fig. 7 und 8 ist ein weiteres Ausführungsbeispiel des erfindungsgemäßen Herstellungsverfahrens beschrieben. Demzufolge ist die Hohlstruktur 13 des Trägerprofilteiles 9 im Unterschied zu den vorangegangenen Figuren nicht offen profiliert, sondern vielmehr geschlossen. In einer, die Hohlstruktur 13 begrenzenden Wandung ist der Einschusskanal 23 vorgesehen, über den sowohl das Leichtfüllstoff-Granulat 17 als auch der Kunststoff-Strukturschaum 15 in die Hohlstruktur 13 einführbar ist. Auf diese Weise kann fertigungstechnisch günstig auf die Bereitstellung eines zusätzlichen Schäumungswerkzeuges 19 verzichtet werden.

Durch die Einbringung des Kunststoff-Strukturschaums 15 in die Blechteil-Hohlstruktur 13 wird die Festigkeit des Bauteilverbunds enorm gesteigert. Generell ist die Erfindung auf Bereiche einer Fahrzeugkarosserie anwendbar, die im Crashfall hohen Belastungen ausgesetzt sind und bei denen die Gefahr besteht, dass sie den hohen Crash-Belastungen nicht standhalten können.

## Patentansprüche

1. Verfahren zur Herstellung eines Fahrzeug-Karosserieelements (3), das als ein Bauteilverbund bereitgestellt wird, der aus zumindest einem, eine Hohlstruktur (13) aufweisenden Trägerprofilteil (9) und aus einem Leichtbauwerkstoff (15) aufgebaut ist, wobei der Leichtbauwerkstoff (15) unter Bildung des Bauteilverbunds in die Hohlstruktur (13) des Trägerprofilteils (9) eingebracht wird und wobei ein Leichtfüllstoff-Granulat (17) vorgesehen ist, wobei der Leichtbauwerkstoff (15) ein Kunststoff-Strukturschaum ist, dessen flüssige Ausgangskomponente unter Druck und Wärme aufgeschäumt wird, und in dem Strukturschaum (15) das Leichtfüllstoff-Granulat (17) integriert ist, **dadurch gekennzeichnet, dass** das Leichtfüllstoff-Granulat (17) vor dem Einspritzen der flüssigen Ausgangskomponente des Strukturschaums (15) als loses Schüttgut in die Hohlstruktur (13) des Trägerprofilteils (9) eingebracht wird, und dass die Hohlstruktur (13) des Trägerprofilteils in Teilkammern (21) unterteilt wird, die in Abhängigkeit von der angestrebten Bauteil-Formstabilität in unterschiedlicher Mengenverteilung mit Leichtfüllstoff-Granulat (17) gefüllt werden.

2. Verfahren nach Anspruch 1, **dadurch gekennzeichnet, dass** die flüssige Ausgangskomponente direkt in die Hohlstruktur (13) des Trägerprofilteils (9) eingespritzt und aufgeschäumt wird.

3. Verfahren nach Anspruch 1 und 2, **dadurch gekennzeichnet, dass** der Kunststoff-Strukturschaum (15) ein 2K-Strukturschaum ist, und/oder dass das Leichtfüllstoff-Granulat (17) ein zellularer Verbundstoff, Blähglasgranulat, Hohlglaskugeln, Mineralschaumgranulat, Metallschaumgranulat oder ein Leichtbau-Granulat ist, wobei das Leichtfüllstoff-Granulat (17) ein im Vergleich zum Strukturschaum (15) reduziertes Raumgewicht aufweist.

4. Verfahren nach einem der vorhergehenden Ansprüche, **dadurch gekennzeichnet, dass** der Schäumungsprozess bei einer Prozesstemperatur erfolgt, die kleiner als die Schmelztemperatur des Leichtfüllstoff-Granulats (17) ist.

5. Verfahren nach einem der vorhergehenden Ansprüche, **dadurch gekennzeichnet, dass** der Leichtbauwerkstoff (15) und das Trägerprofilteil (9) zueinander in stoffschlüssiger Verbindung sind.

6. Verfahren nach einem der vorhergehenden Ansprüche, **dadurch gekennzeichnet, dass** das Trägerprofilteil (9) ein Metall-Blechteil ist und der Leichtbauwerkstoff ein Kunststoff-Strukturschaum ist.

7. Verfahren nach einem der vorhergehenden Ansprüche, **dadurch gekennzeichnet, dass** das Trägerprofilteil (9) schalenförmig mit einer offenen Hohlstruktur (13) bereitgestellt wird, und dass die offene Hohlstruktur (13) des Trägerprofilteils (9) nach dem Schäumungsprozess mittels eines weiteren Profilteils (7) unter Bildung des Karosserieelements (3) geschlossen wird.

8. Verfahren nach Anspruch 7, **dadurch gekennzeichnet, dass** die offene Hohlstruktur (13) des Trägerprofilteils (9) während des Schäumungsprozesses von einem Schäumungswerkzeug (19) schaumdicht geschlossen wird, und dass im Schäumungswerkzeug (19) zumindest ein Einschusskanal (23) vorgesehen ist, durch den die flüssige Ausgangskomponente in die Hohlstruktur (13) eingespritzt wird.

9. Verfahren nach einem der Ansprüche 1 bis 6, **dadurch gekennzeichnet, dass** das Trägerprofilteil (9) mit einer im Profil schaumdicht geschlossenen Hohlstruktur (13) bereitgestellt wird, und das unmittelbar im Trägerprofilteil (9) ein Einschusskanal (23) zum Einbringen der flüssigen Ausgangskomponente ausgebildet wird.

10. Fahrzeug-Karosserieelement, das ein Bauteilverbund aus zumindest einem Trägerprofilteil (9) mit einer Hohlstruktur (13) und einem Leichtbauwerkstoff (15) ist, wobei die Hohlstruktur (13) des Trägerprofilteils (9) mit dem Leichtbauwerkstoff (15) zumindest teilweise gefüllt ist und wobei ein Leichtfüllstoff-Granulat (17) vorgesehen ist, wobei der Leichtbauwerkstoff (15) ein Kunststoff-Strukturschaum ist, dessen flüssige Ausgangskomponente unter Druck und Wärme aufgeschäumt ist, und dass in dem Strukturschaum (15) das Leichtfüllstoff-Granulat (17) integriert ist, **dadurch gekennzeichnet, dass** das Leichtfüllstoff-Granulat (17) vor dem Einspritzen der flüssigen Ausgangskomponente des Strukturschaums (15) als loses Schüttgut in die Hohlstruktur (13) des Trägerprofilteils (9) eingebracht ist, und dass die Hohlstruktur (13) des Trägerprofilteils in Teilkammern (21) unterteilt ist, die in Abhängigkeit von der angestrebten Bauteil-Formstabilität in unterschiedlicher Mengenverteilung mit Leichtfüllstoff-Granulat (17) gefüllt sind.

## Claims

1. Method for manufacturing a vehicle body element (3), which is provided as a component composite, consisting of at least one support profile part (9) having a hollow structure (13) and of a lightweight construction material (15), wherein the lightweight construction material (15) is introduced into the hollow structure (13) of the support profile part (9) by forming the component composite and wherein a lightweight filler granulate (17) is provided, wherein the lightweight construction material (15) is a plastic structural foam, the liquid starting component of which is foamed under pressure and heat, and the lightweight filler granulate (17) is integrated into the structural foam (15), **characterised in that** the lightweight filler granulate (17), before injecting the liquid starting component of the structural foam (15), is introduced as loose bulk material into the hollow structure (13) of the support profile part (9) and **in that** the hollow structure (13) of the support profile part is divided into part chambers (21) which are filled with lightweight filler granulate (17) in different quantity distributions as a function of the desired component form stability.

2. Method according to claim 1, **characterised in that** the liquid starting component is injected directly into the hollow structure (13) of the support profile part (9) and foamed.

3. Method according to claim 1 and 2, **characterised in that** the plastic structural foam (15) is a two-component structural foam and/or **in that** the lightweight filler granulate (17) is a cellular composite, foam glass granulate, hollow glass spheres, mineral foam granulate, metal foam granulate or a lightweight granulate, wherein the lightweight filler granulate (17) has a reduced density compared to the structural foam (15).

4. Method according to any of the preceding claims, **characterised in that** the foaming process is performed at a process temperature which is lower than the melt temperature of the lightweight filler granulate (17).

5. Method according to any of the preceding claims, **characterised in that** the lightweight construction material (15) and the support profile part (9) are joined to one another in a firmly bonded manner.

6. Method according to any of the preceding claims, **characterised in that** the support profile part (9) is a metal sheet part and the lightweight construction material is a plastic structural form.

7. Method according to any of the preceding claims, **characterised in that** the support profile part (9) is provided in the form of a shell with an open hollow structure (13), and **in that** the open hollow structure (13) of the support profile part (9) is closed after the foaming process by means of an additional profile part (7) by forming the body element (3).

8. Method according to claim 7, **characterised in that** the open hollow structure (13) of the support profile part (9) is sealed by foam during the foaming process by a foaming tool (19), and **in that** in the foaming tool (19) at least one injection channel (23) is provided through which the liquid starting component is injected into the hollow structure (13).

9. Method according to any of claims 1 to 6, **characterised in that** the support profile part (9) is provided with a hollow structure (13) which is sealed by foam in the profile and an injection channel (23) is formed directly in the support profile part (9) for introducing the liquid starting component.

10. Vehicle body element, which is a component composite consisting of at least one support profile part (9) with a hollow structure (13) and of a lightweight construction material (15), wherein the hollow structure (13) of the support profile part (9) is at least partly filled with the lightweight construction material (15) and wherein a lightweight filler granulate (17) is provided, wherein the lightweight construction material (15) is a plastic structural foam, the liquid starting component of which is foamed under pressure and heat and in that the lightweight filler granulate (17) is integrated into the structural foam (15), **characterised in that** the lightweight filler granulate (17), before injecting the liquid starting component of the structural foam (15), is introduced as a loose bulk material into the hollow structure (13) of the support profile part (9) and **in that** the hollow structure (13) of the support profile part is divided into part chambers (21) which are filled with lightweight filler granulate (17) in different quantity distributions as a function of the desired component form stability.

## Revendications

1. Procédé de fabrication d'un élément de carrosserie de véhicule (3) qui est mis à disposition en tant qu'élément composite qui est constitué d'au moins une partie de profilé porteur (9) présentant une structure creuse (13) et d'un matériau de construction légère (15), dans lequel le matériau de construction légère (15) est introduit en formant l'élément composite dans la structure creuse (13) de la partie de profilé porteur (9) et dans lequel un granulat de substance de remplissage légère (17) est prévu, dans lequel le matériau de construction légère (15) est une mousse structurelle en matière plastique dont le composant de départ liquide est moussé sous l'effet de la pression et de la chaleur, et le granulat de substance de remplissage légère (17) est intégré dans la mousse structurelle (15), **caractérisé en ce que** le granulat de substance de remplissage légère (17) est introduit avant l'injection du composant de départ liquide de la mousse structurelle (15) en tant que marchandises en vrac dans la structure creuse (13) de la partie de profilé porteur (9), et que la structure creuse (13) de la partie de profilé porteur est divisée en chambres partielles (21) qui sont remplies en fonction de la stabilité de forme de composant visée dans une répartition de quantité différente avec un granulat de substance de remplissage légère (17).

2. Procédé selon la revendication 1, **caractérisé en ce que** le composant de départ liquide est injecté et moussé directement dans la structure creuse (13) de la partie de profilé porteur (9).

3. Procédé selon les revendications 1 et 2, **caractérisé en ce que** la mousse structurelle de matière plastique (15) est une mousse structurelle à deux composants, et/ou que le granulat de substance de remplissage légère (17) est une substance composite cellulaire, un granulat de verre soufflé, des billes de verre creux, un granulat de mousse minérale, un granulat de mousse métallique ou un granulat de construction légère, dans lequel le granulat de substance de remplissage légère (17) présente un poids volumique réduit par rapport à la mousse structurelle (15).

4. Procédé selon l'une quelconque des revendications précédentes, **caractérisé en ce que** le processus de moussage est effectué à une température de processus qui est inférieure à la température de fonte du granulat de substance de remplissage légère (17).

5. Procédé selon l'une quelconque des revendications précédentes, **caractérisé en ce que** le matériau de construction légère (15) et la partie de profilé porteur (9) sont en liaison de matière l'un avec l'autre.

6. Procédé selon l'une quelconque des revendications précédentes, **caractérisé en ce que** la partie de profilé porteur (9) est une partie de tôle métallique et le matériau de construction légère est une mousse structurelle en matière plastique.

7. Procédé selon l'une quelconque des revendications précédentes, **caractérisé en ce que** la partie de profilé porteur (9) est mise à disposition en forme de coque avec une structure creuse ouverte (13), et que la structure creuse ouverte (13) de la partie de profilé porteur (9) est fermée après le processus de moussage au moyen d'une autre partie de profilé (7) en formant l'élément de carrosserie (3).

8. Procédé selon la revendication 7, **caractérisé en ce que** la structure creuse ouverte (13) de la partie de profilé porteur (9) est fermée pendant le processus de moussage de manière étanche à la mousse par un outil de moussage (19), et qu'au moins un canal d'injection (23) est prévu dans l'outil de moussage (19), par lequel le composant de départ liquide est injecté dans la structure creuse (13).

9. Procédé selon l'une quelconque des revendications 1 à 6, **caractérisé en ce que** la partie de profilé porteur (9) est mise à disposition avec une structure creuse (13) fermée de manière étanche à la mousse dans le profilé, et que directement dans la partie de profilé porteur (9) un canal d'injection (23) est réalisé pour l'introduction du composant de départ liquide.

10. Elément de carrosserie de véhicule qui est un élément composite constitué d'au moins une partie de profilé porteur (9) avec une structure creuse (13) et d'un matériau de construction légère (15), dans lequel la structure creuse (13) de la partie de profilé porteur (9) est remplie au moins partiellement du matériau de construction légère (15) et dans lequel un granulat de substance de remplissage légère (17) est prévu, dans lequel le matériau de construction légère (15) est une mousse structurelle en matière plastique dont le composant de départ liquide est moussé sous l'effet de la pression et de la chaleur, et que le granulat de substance de remplissage légère (17) est intégré dans la mousse structurelle (15), **caractérisé en ce que** le granulat de substance de remplissage légère (17) est introduit avant l'injection du composant de départ liquide de la mousse structurelle (15) en tant que marchandises en vrac dans la structure creuse (13) de la partie de profilé porteur (9), et que la structure creuse (13) de la partie de profilé porteur est divisée en chambres partielles (21) qui sont remplies en fonction de la stabilité de forme de composant visée dans une répartition de quantité différente avec un granulat de substance de remplissage légère (17).
